**Europäisches Patentamt**

**European Patent Office**

**Office européen des brevets**

(19)

(11) **EP 1 293 901 A2**

(12) **EUROPEAN PATENT APPLICATION**

(43) Date of publication:
**19.03.2003 Bulletin 2003/12**

(51) Int Cl.⁷: **G06F 9/48**, G06F 9/50

(21) Application number: **02021242.9**

(22) Date of filing: **18.09.2002**

| | |
|---|---|
| (84) Designated Contracting States:<br>**AT BE BG CH CY CZ DE DK EE ES FI FR GB GR<br>IE IT LI LU MC NL PT SE SK TR**<br>Designated Extension States:<br>**AL LT LV MK RO SI** | (72) Inventor: **Tanaka, Katsuyoshi**<br>**Yokohama-shi, Kanagawa 255-0024 (JP)** |
| (30) Priority: **18.09.2001 JP 2001283360** | (74) Representative: **Grünecker, Kinkeldey,<br>Stockmair & Schwanhäusser Anwaltssozietät<br>Maximilianstrasse 58<br>80538 München (DE)** |
| (71) Applicant: **MATSUSHITA ELECTRIC INDUSTRIAL<br>CO., LTD.<br>Kadoma-shi, Osaka 571-8501 (JP)** | |

(54) **Distributed processing system, job distribution method and distribution program**

(57)    A distributed computer system includes a job history saving function (102) for saving execution history data pertaining to a job processed by the system in a referable manner; a queued job completion time computation function (105) of predicting a completion time of a loaded job, from processing capacity and operating condition of the system and the execution history data; and a job execution priority management function (103) for adjusting a rate of decrease of priority of the loaded job in accordance with the predicted completion time of the job when the priority of the loaded job is lowered.

*FIG. 1*

**EP 1 293 901 A2**

**Description**

<u>Background of the Invention</u>

The invention relates to a distributed computer system which integrates a plurality of computers (or servers) distributed over a network, as well as to a distributed processing system and a distributed job processing method, which effectively process a job loaded by a user, in accordance with a time factor set for executing a job.

Nowadays, a computing system has become an important element in business activities, to such an extent that we can say with assurance that there remain no business activities which do not involve a computing system. Particularly, as a result of proliferation of the Internet and relevant technological innovation, which started in the late 1990s, a distributed computing system linked by way of a network has become more important than ever.

A factor responsible for this is as follows. In association with globalization of business activities to the extent that business activities have become borderless, competition among corporations has become more severe. Among business operations stemming from every site of business activities, processing of a certain business operation must be completed without fail within a predetermined period of time, even when this results in a delay in another business operation. Moreover, at every site of business activities, costs must be curtailed to the smallest possible amounts . In such a situation, if a corporation has failed to introduce a new product or service into the market earlier than competitors for reasons of slow product development, the corporation cannot prevail in competition among corporations and fails to survive.

In order to efficiently process, within a short period of time, business operations stemming from every site of business activities, corporations have introduced a large amount of administrative resources and established a large-scale distributed computer system, by means of interconnecting a plurality of computers (e.g., servers) by way of a local area network (LAN) or a wide area network (WAN).

In relation to a case where a processing unit to be processed by a distributed computer system - which is called a job, a process, or a task - is executed by a computer (or a server), there have already been known a plurality of techniques which enable ascertainment of statuses of server resources (hardware and software) and optimal distribution of jobs for effective utilization of server resources and improvement of processing efficiency.

As a method of distributing jobs in a distributed processing computer system, the following have already been practiced: (1) a method of distributing jobs at the time of startup thereof in accordance with the status of consumption of respective server resources, as described in Japanese Patent Publication No. H10-11406; (2) a method of predicting beforehand the amount of server resources which are to be consumed by jobs to be executed and of distributing the jobs such that an aggregate of server resources to be used by the jobs is not to exceed a total amount of resources of the server, as described in Japanese Patent Publication No. H10-19864; and (3) a method of distributing jobs in accordance with a preset policy.

As mentioned above, various techniques for efficiently processing jobs loaded in a distributed computer system have already been disclosed. However, there are disclosed substantially no techniques which, at the time of utilization of the distributed computer system, enable a user to dynamically determine the statuses of jobs in a distributed computing system and to change priorities of jobs to be executed.

Servers which constitute a large-scale distributed computer system are very expensive products. Since the system is constituted of a large number of servers, each of the previously-described job distribution methods effectively utilizes server resources, and a track record of consumption of server resources is reflected in a charge to a user.

Conventionally, when a user utilizes such a large-scale distributed computer system, billing has hitherto been performed on the basis of a track record of use of server resources, regardless of whether or not a time factor, that is, a time limit, is set for executing a job required by the user. For example, there has been practiced a method in which the following information is saved in a job execution history: a department which has used respective server resource, a user, and hours during which the server resources have been used, and in which the thus-saved data are compiled. Even when for some reason there is a desire to reduce usage costs of a computer, such a desire cannot be satisfied.

Two major problems are encountered in utilizing and operating such a large-scale distributed computer system. A first problem lies in that a user's desire pertaining to a time factor cannot be satisfied. Specifically, a job cannot be processed flexibly in accordance with situations; namely, when a time factor or a time limit is set for completing a job, the job is assigned a higher priority so as to be processed within the shortest period of time; and, when no time factor or no time limit is set for completing a job or when a comparatively loose time limit is set for a job, the job is processed at a lower priority.

The conventional techniques enable efficient distribution of jobs loaded into a distributed computer system to respective servers in the sequence in which the jobs have been loaded. As a method of distributing jobs, there is disclosed (1) the previously-described method of determining away to distribute jobs in consideration of the available status of respective servers at the time of startup of the jobs.

Under this method, jobs are processed in the sequence in which the jobs have been loaded by the users.

This method cannot take into consideration a priority reflecting a time limit for executing a job requested by a user. Therefore, when a job which must be completed by a time limit and a job having no time limit are processed simultaneously, the job having a time limit cannot be processed first.

As another previously-described method of distributing jobs, there is disclosed (2) a method of selecting an optimum server in consideration of resources of servers which are available at the time of distribution of jobs and statuses of other jobs, and of executing the jobs when there are executed jobs involving use of a known amount of server resources over the lifetime of the jobs (i.e., over a period from the time the jobs are started until the time the jobs are completed) .

However, even in this conventional technique, an optimal server is selected at the time of execution of jobs. Hence, no consideration can be given to a user's desired time factor or time limit which determines the priority of a job.

Present business activities entail a necessity for processing various jobs; that is, a job which is to be processed within a short period of time or a job whose processing involves consumption of several days. In the case of a single job whose processing involves consumption of several days, the job is requested with a lower priority. Hence, only jobs involving short periods of processing time are automatically processed at higher priorities. Conversely, the same can be achieved even when jobs involving short periods of processing time are assigned higher priorities.

In this way, the conventional job distribution methods are for efficiently processing jobs within the shortest periods of time in the sequence in which the jobs are loaded into a distributed computer system. However, these methods do not taken into consideration a timetable element; that is, a user' s desired completion time of a job.

A second problem lies in that a predetermined bill for a job is issued on the basis of a track record of use of server resources, regardless of whether or not a time factor or a time limit is set for completing a job requested by a user.

In relation to billing processing of a conventional distributed computer system, track records of use of the computer system pertaining to jobs processed by respective servers (e.g., departments which have used the computer system, users, and operating hours) are compiled at a single location. A track record of use of the computer system is compiled on a per-user basis, and usage costs of a computer are billed. The track record of use of the computer used as a basis for billing a computer usage fee does not take into consideration a priority reflecting a user's desired time factor or limit for execution of an individual job.

If all users of the distributed computer system execute jobs at higher priorities, new capital investment for new computer resources is required for satisfying the desires of all the users. To this end, if a user can set an appropriate priority for an individual job and the distributed computer system can be used with mutual concessions, there is a chance that a sufficient volume of job can be processed by the current computer resources.

In such a case, some profit must be given as a reward to a user who has assigned a lower priority to his/her job. Failure to use such profits makes it very difficult to realize operation of the distributed computer system in which users are expected to assign lower priorities to their jobs. The fact is that no consideration has hitherto been given to the quality of service of computer users from this viewpoint. From the standpoint of users of the computer system, a track record of use of the computer is preferably compiled in consideration of priorities assigned to the jobs requested by a user.

Summary of the Invention

The invention is to solve the above-described problems in the art and aims at providing a distributed processing system and a job distribution processing method, which realize the function of adjusting priorities of jobs requested by users of a distributed computer system for executing the jobs in accordance with time factors or time limits for completion of the jobs.

The invention also aims at providing a distributed processing system and a job distribution processing method, which provide a reward to a user who has assigned a lower priority to his/her job which and issues a bill in accordance with the result of adjustment of priorities.

A distributed computer system according to a first aspect of the invention corresponds to a distributed computer system including a plurality of computers linked together by way of a network, the system comprising means for saving, in a referable manner, execution history data pertaining to a job processed by the system (i.e., a job execution history saving function 102) ; means for predicting a completion time of a loaded job, from processing capacity and operating condition of the system and the execution history data (a function 105 for computing completion time of queued jobs) ; and means for adjusting a rate of decrease in priority of the loaded job in accordance with the completion time of the job as predicted for a case where the priority of the loaded job is lowered (i.e., a job execution priority management function 103).

According to the distributed processing system of the first aspect of the invention, a rate of decrease in priority of the loaded job is lowered in accordance with the completion time of the job as predicted for a case where the priority of the loaded job is lowered. This enables lowering of priorities of individual jobs in accordance with their completion times. Priorities of other jobs are increased as a result of lowering of the priority of a loaded job. Hence, the user can select a job execution method in accordance with circumstances of respective jobs.

A distributed processing system according to a second aspect of the invention is directed toward that defined in the first aspect, wherein, when the priority of a loaded job is lowered, the means for predicting a completion time of a loaded job predicts a completion time of jobs under execution and jobs in queue having priorities higher than that of the loaded job.

According to the distributed processing system of the second aspect of the invention, the means for predicting a completion time of a loaded job enables prediction of respective completion times of jobs under execution and respective completion times of jobs in queue having priorities higher than that of the loaded job. Hence, when the priorities of the loaded job are lowered, jobs can be appropriately distributed within a distributed processing system in accordance with completion times of the jobs.

A distributed processing system according to a third aspect of the invention is directed toward that defined in the first or second aspect of the invention and further comprises means for selecting from the execution history data a job analogous to the job loaded by a user of the system, wherein the means for predicting a completion time of a loaded job predicts a completion time of the job for a case where the priority of the loaded job is lowered, by reference to execution history data pertaining to the selected analogous job.

According to the distributed processing system of the third aspect, even when an analogous job is unknown to a user of the system, an analogous job can be retrieved from execution history data, by means of selecting from the execution history data a job analogous to the job loaded by the user, thereby enabling an improvement in the prediction accuracy of completion time of the job.

A distributed processing system according to a fourth aspect of the invention is directed toward that defined in any one of the first through third aspects and further comprises means for specifying a job number of the job analogous to the job loaded by a user of the system from among jobs executed in the past, wherein the means for predicting a completion time of a loaded job predicts a completion time of the job for a case where the priority of the loaded job is lowered, by reference to execution history data pertaining to the job assigned the specified job number.

According to the distributed processing system of the fourth aspect of the invention, an analogous job can be referenced directly from the execution history data, by means of designating a job number of the job analogous to the loaded job from among the jobs executed in the past. Thus, the prediction accuracy of completion time of the job can be improved.

A distributed processing system according to a fifth aspect of the invention is directed toward that defined in any one of the first through fourth aspects of the invention and further comprises means for inputting a predicted execution time of a job loaded by a user of the system, wherein, when a job analogous to the loaded job is not found in the jobs executed in the past, the means for predicting a completion time of a loaded job predicts a completion time of the job for a case where the priority of the loaded job is lowered, by reference to the entered, predicted execution time.

According to the distributed processing system of the fifth aspect of the invention, even when a job analogous to the loaded job has never been executed in the past, a completion time of the loaded job can appropriately predicted, by means of the user entering a predicted execution time.

A distributed processing system according to a sixth aspect of the invention is directed toward that defined in any one of the first through fifth aspects of the invention and further comprises charging means for increasing or decreasing a computer usage fee per unit time for a loaded job in accordance with a change in the priority of the job when the priority of the job has been changed by means for adjusting a rate of decrease in the priority of the loaded job.

According to the distributed processing system of the sixth aspect of the invention, a computer usage fee per unit time for a job of interest is increased or decreased in accordance with a change in the priority of the job through charging operation. As a result, when the user has lowered priorities of respective jobs in accordance with their completion times, profits can be afforded to the user as a reward.

A distributed processing system according to a seventh aspect of the invention is directed toward that defined in any one of the first through sixth aspects of the invention and further comprises charging means for increasing a computer usage fee per unit time for the loaded job when priorities of other jobs are lowered as a result of adjustment having been performed so as to increase the priority of the loaded job with use of the means for adjusting a rate of decrease in the priority of the loaded job and simultaneously lowering computer usage fees for the other jobs whose priorities have been lowered by an amount corresponding to the increase in the computer usage fee.

According to the distributed processing system of the seventh aspect of the invention, computer usage fees for the jobs whose priorities have been lowered as a result of adjustment of the priority of the loaded job are lowered, thus enabling equitable charging operation in consideration of users whose jobs are assigned lowered priorities.

A distributed job processing method according to a eighth aspect of the invention corresponds to a distributed job processing method which uses a distributed computer system including a plurality of computers linked together by way of a network, the method comprising: a step of saving, in a referable manner, execution history data pertaining to a job processed by the system; a step of predicting a completion time of a loaded job, from processing capacity and operating condition of the system and the execution history data; and a step of adjusting a rate of decrease in priority of the loaded job in accordance with the completion time of the job as predicted for a case where the priority of the loaded job is lowered.

According to the distributed processing method of the eighth aspect of the invention, a rate of decrease in priority of the loaded job is lowered in accordance with the completion time of the job predicted for a case where the priority of the loaded job is lowered. This enables lowering of priorities of individual jobs in accordance with their completion times. Priorities of other jobs are increased as a result of lowering of the priority of a loaded job. Hence, the user can select a job execution method in accordance with circumstances of respective jobs.

A distributed processing method according to a ninth aspect of the invention is directed toward that defined in the eighth aspect of the invention, wherein, when the priority of a loaded job is lowered, a completion time of jobs under execution and jobs in queue having priorities higher than that of the loaded job is predicted in the step of predicting a completion time of a loaded job.

According to the distributed processing method of the ninth aspect of the invention, there can be predicted respective completion times of jobs under execution and respective completion times of jobs in queue having priorities higher than that of the loaded job. Hence, when the priorities of the loaded job are lowered, jobs can be appropriately distributed within a distributed processing system in accordance with completion times of the jobs.

A distributed processing method according to a tenth aspect of the invention is directed toward that defined in the eighth or ninth aspect of the invention and further comprises a step of selecting from the execution history data a job analogous to the job loaded by a user of the system; and a step of predicting a completion time of a loaded job for a case where the priority of the loaded job is lowered, by reference to execution history data pertaining to the selected analogous job.

According to the distributed processing method of the tenth aspect of the invention, even when an analogous job is unknown, an analogous job can be retrieved from execution history data, by means of selecting from the execution history data a job analogous to the job loaded by a user of the system, thereby enabling an improvement in the prediction accuracy of completion time of the job.

A distributed processing method according to eleventh aspect of the invention is directed toward that defined in any one of the eighth through tenth aspects of the invention and further comprises a step of specifying from among jobs executed in the past a job number of a job that is analogous to the job loaded by a user of the system; and a step of predicting a completion time of a loaded job for a case where the priority of the loaded job is lowered, by reference to execution history data pertaining to the job assigned the specified job number.

According to the distributed processing method of the eleventh aspect of the invention, an analogous job can be referenced directly from the execution history data, by means of designating from among the jobs executed in the past a job number of the job analogous to the loaded job. Thus, the prediction accuracy of completion time of the job can be improved.

A distributed processing method according to a twelfth aspect of the invention is directed toward that defined in any one of the eighth through tenth aspects of the invention and further comprises a step of inputting a predicted execution time of a job loaded by a user of the system; and, when a job analogous to the loaded job is not found among the jobs executed in the past, a step of predicting a completion time of a loaded job for a case where the priority of the loaded job is lowered, by reference to the entered, predicted execution time.

According to the distributed processing method of the twelfth aspect of the invention, even when a job analogous to the loaded job has never been executed in the past, a completion time of the loaded job can appropriately predicted, by means of the user entering a predicted execution time.

A distributed processing method according to a thirteenth aspect of the invention is directed toward that defined in any one of the eighth through twelfth aspects of the invention and further comprises a step of performing a charging operation by means of increasing or decreasing a computer usage fee per unit time for a loaded job in accordance with a change in the priority of the job when the priority of the job has been changed by the means for adjusting a rate of decrease in the priority of the loaded job.

According to the distributed processing method of the thirteenth aspect of the invention, a computer usage fee per unit time for a job of interest is increased or decreased in accordance with a change in the priority of the job, through charging operation. As a result, when the user has lowered priorities of respective jobs in accordance with their completion times, profits can be afforded to the user as a reward.

A distributed processing method according to a fourteenth aspect of the invention is directed toward that defined in any one of the eighth through thirteenth aspects of the invention and further comprises a charging step of increasing a computer usage fee per unit time for the loaded job when priorities of other jobs are lowered as a result of adjustment having been performed so as to increase the priority of the loaded job by use of the means for adjusting a rate of decrease in the priority of the loaded job and simultaneously lowering computer usage fees for the other jobs whose priorities have been lowered by an amount corresponding to the increase in the computer usage fee.

According to the distributed processing method of the fourteenth aspect of the invention, computer usage fees for the jobs whose priorities have been lowered as a result of adjustment of the priority of the loaded job are lowered, thus enabling equitable charging operation in consideration of users whose jobs are assigned lowered priorities.

Brief Description of Drawings

Fig. 1 is a block diagram showing the configuration of a distributed processing system according to an embodiment of the invention;

Fig. 2 is a block diagram showing an example configuration of the principal functions of the distributed processing system according to the embodiment;

Fig. 3 is a flowchart for describing the operation of the distributed processing system according to the embodiment;

Fig. 4 is a view showing a job request format to be sent to a job queuing server;

Fig. 5 is a view showing a result of retrieval of analogous jobs in list form;

Fig. 6 is a view showing a data format to be used for managing operating conditions of respective servers;

Fig. 7 is a view showing an attribute format pertaining to a queued job under management of the job queuing server;

Fig. 8 is a view showing a storage format of execution history data;

Fig. 9 is a flowchart for describing operation of charge aggregation operation; and

Fig. 10 is a view showing an output format of a track record report about usage hours of a CPU according to a user.

Detailed Description of the Preferred Embodiment

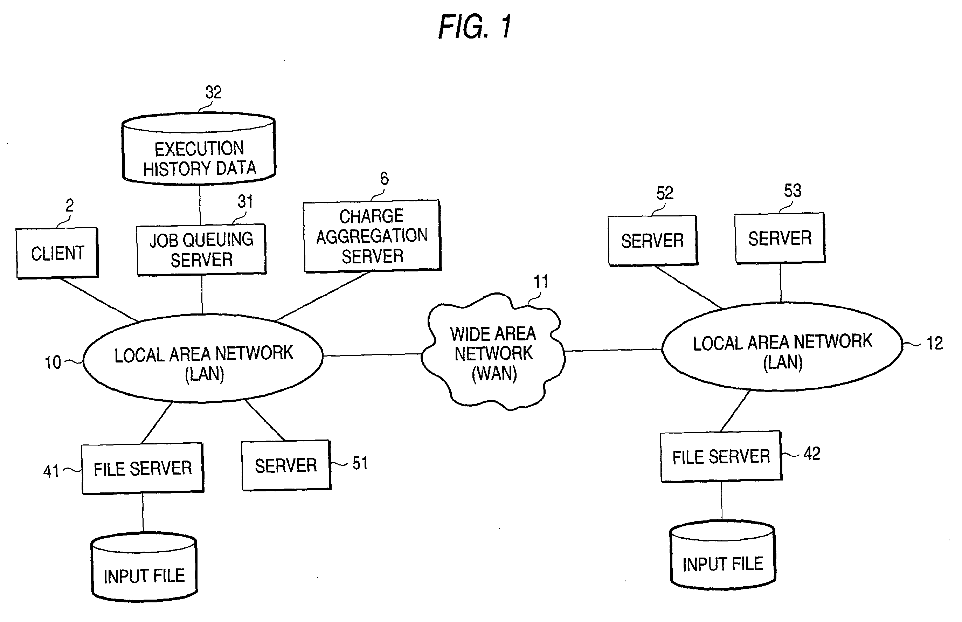

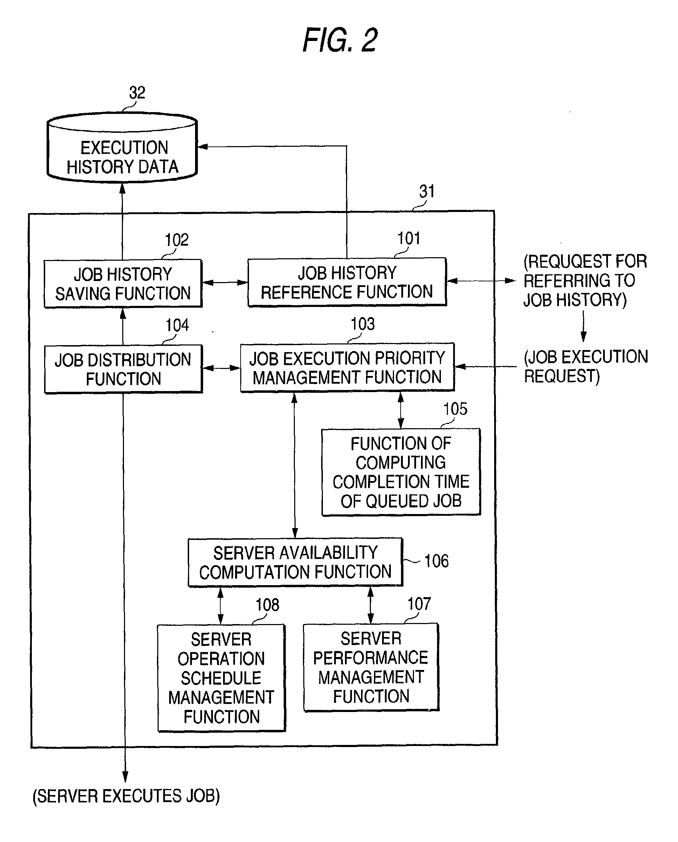

An embodiment of the invention will be described by reference to the accompanying drawings. Fig. 1 is a block diagram showing the configuration of a distributed computer system for activating a distributed processing system according to an embodiment of the invention. Fig. 2 is a block diagram showing an example functional configuration of a job queuing server which materializes primary functions according to the invention in connection with the distributed computer system shown in Fig. 1.

As shown in Fig. 1, a client 2 is a computer which loads a job. A job queuing server 31 is a computer which determines apriority of a job corresponding to a user's desired time factor; that is, a completion time of a job, searches for a server capable of optimally executing the job, and distributes the job. A storage device 32 for saving data pertaining to the history of execution of a job (hereinafter simply called "execution history data") is connected to the job queuing server 31.

File servers 41, 42 are computers for holding an input file and an application program, which are to be used for a job. Servers 51, 52, and 53 are computers for executing a job. A charge aggregation server 6 is a computer for effecting a charging operation on the basis of execution history data. A job file, an input file, and an application file are stored in a storage device connected to the servers 41, 42.

The client 2 and the servers 31, 41, 42, 51, 52, 53, and 6 are electronic computers, such as personal computers and workstations. They are interconnected by way of local area networks 10, 12 and a wide area network 11.

As shown in Fig. 2, the job queuing server 31 comprises a job history reference function 101 for referring to data pertaining to a history of jobs executed in the past; a job history saving function 102 for saving execution history data; a job execution priority management function 103 for determining a priority of a job such that a job is to be completed within a user's desired time limit; a job distribution function 104 of selecting an optimal server for executing a loaded job and automatically distributing the job to the thus-selected server; a queued job completion time computation function 105 of predicting a completion time of a queued job; a server availability computation function 106 of predicting a completion time of processing being executed by a server; a server performance management function 107 for normalizing the capacity of a server which executes a job; and a server operation schedule management function 108 for managing a planned schedule for a server which executes a job.

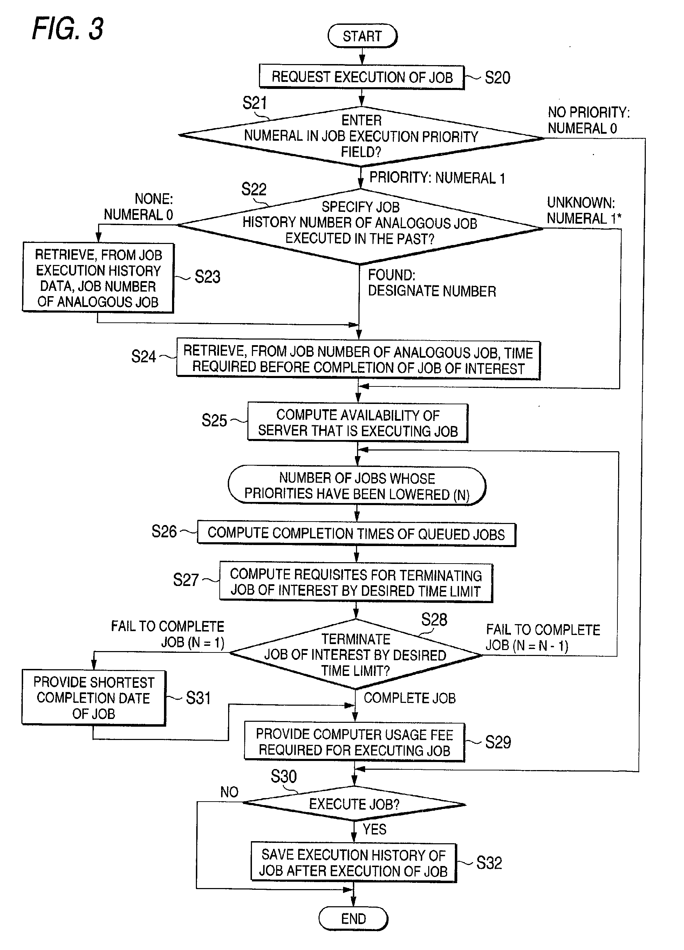

The operation of the distributed computer system having the foregoing configuration will now be described by reference to a flowchart shown in Fig. 3.

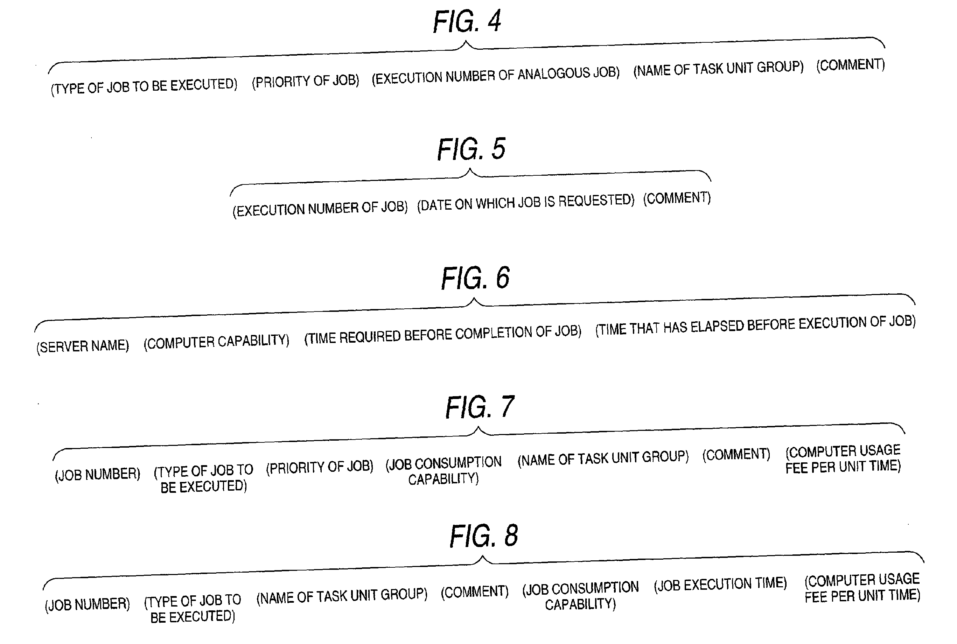

When a user of the client 2 executes a job, in step S20 the user specifies an execution time limit in the form of a job request form shown in Fig. 4, thus loading the job into the job queuing server 31. At this time, if no time factor or no time limit is set for the job or a loose time factor or time limit is set for the job and hence a lower priority may be as signed to the job, numeral "1" is specified in a job execution priority field. If the job is to be executed at a normal priority, numeral "0" is specified in the job execution priority field.

If a job analogous to the job which is to be executed this time has ever been executed and an execution number of the analogous job is known, the execution number of the analogous job is specified. If a job analogous to the job which is to be executed this time has ever been executed but the execution number of the analogous job is unknown, numeral "0" is specified for the execution number of the analogous job. If a job analogous to the job which is to be executed this time has never been executed, a special character "*" and a user's predicted time (seconds) which will be required before completion of a job are specified next to numeral "1."

If numeral "0" is provided in the job execution priority field, in step S21 no change is made to the job execution priority. Hence, processing proceeds to step S30. When numeral "1" is provided in the job execution priority field, designation is performed so as to assign a lower priority to a job, and hence processing proceeds to step S22.

In step S22, when numeral "0" has been specified for the execution number of the analogous job in the form of the job request form shown in Fig. 4, processing proceeds to step S23. When the special character "*" and a user's predicted time (seconds) required before completion of a job are specified next to numeral "1," processing proceeds to step S25. If a job number of an analogous job is specified with a numeral other than those set forth, processing proceeds to step S24.

If the user has specified numeral "0" as the execution number of the analogous job, in step S23 the analogous job is retrieved from execution history data 32 by means of the job history reference function 101. At that time, the job history reference function 101 utilizes, e.g., a user's name, the kind of a job, and the name of a task unit group. The job queuing server 31 displays a list of results of retrieval of analogous jobs in the form of an analogous job display format shown in Fig. 5. The user selects an execution number of an analogous job.

When the execution number of the analogous job has become known by means of any one of the methods, in step S24 the job history reference function 101 searches for a time which will be required before completion of a job, from the job history data 32.

Next, the availability of the server capable of executing the job loaded this time is computed, by means of the server availability computation function 106. Specifically, a completion time of the loaded job is precisely predicted on the basis of a job progress rate of the job currently executed in the server and an operation schedule of the server.

The server availability computation function 106 receives information about computation capability of each server (SPEC) from the server performance management function 107 which manages computation capability of each server. For instance, computation capability is computed by the following equation.

$$\text{SPEC} = \text{Frequency of a CPU (MHz)} \times \text{the number of CPUs} \times$$

$$\text{real storage capacity (MB)}$$

Next, the server availability computation function 106 ascertains a timetable and hours during which a server will be available with regard to the respective servers, by way of the server operation schedule management function 108. For example, if a server is described as being scheduled to stop operation 12 hours from now, the server is omitted from candidates available for a job.

Finally, in order to compute a job progress rate of each server (PROG), the server availability computation function 106 merges operating conditions of respective servers in the data format shown in Fig. 6. At this point in time, the availability (AVA) of each server with regard to queued jobs can be computed. For example, a job progress rate and availability can be computed in the following manners:

$$\text{PROG} = \text{time elapsed for executing a job (seconds)} \times \text{time}$$

$$\text{required until completion of the job (seconds)}$$

$$\text{AVA} = \text{job progress rate (PROG)} \times \text{computation capability}$$

$$\text{of a server (SPEC)}$$

In step S25, the availability (AVA) of respective servers is computed, and computation results of all servers which have been compiled are used as availability.

Next, there will be computed a time required until completion of N queued jobs. Queued jobs are managed by the job queuing server 31 in an attribute format shown in Fig. 7. Job consumption capability is determined, by means of multiplying the computation capability (SPEC) required for completing a job of interest by a time required until completion of the job (seconds).

For instance, job consumption capability of a job for which a server of SPEC=100 requires 50 seconds is determined as 100 x 50 = 5000. When this job is executed by a server having computation capability SPEC = 200, a time (Quitime) required until completion of the job becomes 5000/200 = 25 (seconds).

In this way, in step S26, an aggregate of job consumption capabilities of queued jobs is divided by an aggregate of computation capabilities of servers capable of executing the queued jobs. The result of division is added to the availability (AVA) computed in step S25, thereby computing the time (Quitime) required until completion of a currently-queued job.

Next, there will be determined a requirement for completing within a time limit a job requested by the user this time. A job to be executed this time is executed at a lower priority, and hence the time that elapses before completion of the job will become longer as compared with a case where the job is executed at a normal priority.

By means of the user knowing in advance a scheduled completion time of a job requested by the user, the extent to which the priority of the job is lowered is adjusted, thus satisfying the user's desire. More specifically, in relation to a group of jobs whose priorities have been lowered, a determination is made as to whether or not the job will be completed by a user's desired time and date, by means of modifying priorities of queuing jobs.

If the priority of the job is increased by means of adjustment of priorities of queued jobs for reasons of no match existing between the user's desired time limit of the job and a designated priority, usage costs of a computer per unit time will increase as compared with a case where the priority of the job is lowered to the lowest possible priority. At this time, reference is made to a computer usage fee management function of the charge aggregation server 6 with regard to the rate of revision of a computer usage fee per unit time. Criteria for revision of computer usage fees are as follows.

Criteria 1: In relation to a job whose priority in a queue has already been changed on condition that a computer usage fee per unit time is increased, a user's desired time limit for completing the job is satisfied. On condition that a priority to be imparted to a job group of jobs of normal priorities is taken as a ceiling, the priority of a current job in a queue is changed. At this time, a computer usage fee which is one rank higher than a currently applicable computer usage fee is applied to the job.

Criteria 2: A computer usage fee which is higher than that applied to a job having no priority is not to be applied to a job whose priority has been lowered.

In step S28, on the basis of such criteria, a determination is made as to whether or not a job will be completed by a user's desired time limit (i.e., Reqtime), by means of, e.g., the following computation equation.

Reqtime $\geq$ current time + availability (AVA) + completion time of a queued job (Qutime)

A determination is made in the following three ways by means of the equation. A first determination is directed toward a case where a user's desire cannot be satisfied. The user's desire is satisfied by means of increasing the priority of the job in a queue. To this end, a determination is again made by means of increasing the priority of the queued job. At this time, a computer usage fee is also increased at a constant rate by means of increasing the priority of a queued job.

In relation to jobs whose priorities have been lowered as a result of increase in the priority of the queued job, computer usage fees for these jobs are subtracted by an amount corresponding to the increase in the computer usage fee for the job whose priority has been increased. Subsequently, one is subtracted from the number of queued jobs N whose priorities have been lowered, and processing returns to step S25.

A second determination is directed toward a case where the job cannot be expected to be completed by the user's desired time limit even when the priority of the queuing job is increased to the highest level. Processing proceeds to step S31. In step S31, the priority of the job is not lowered, and an expected completion time and a computer usage fee, which will arise when the job is requested to be executed at a normal priority, is calculated and provided to the user.

A third determination is directed toward a case where a job of interest can be completed by a user's desired time limit. Processing proceeds to step S29. In step S29, a computer usage fee per unit time which is a requisite for completing a job by the user's desired time limit is calculated and provided to the user.

Next, the user renders a final determination as to execution of a job from the computer usage fees per unit time provided by the job queuing server 31 and expected completion times. If the job is not executed, processing is terminated in step S30. In contrast, if the job is executed, in step S32 various data sets pertaining to a job execution history are saved in the execution history data 32 in the storage format shown in Fig. 8 after completion of the job.

According to the embodiment, a lower priority is assigned to some jobs in consideration of operating status of a distributed computer system so that a job which is highly important for a user can be processed at a higher priority. At that time, there is embodied a function of increasing a computer usage fee per unit time for the job in conjunction with the change in the priority of the job.

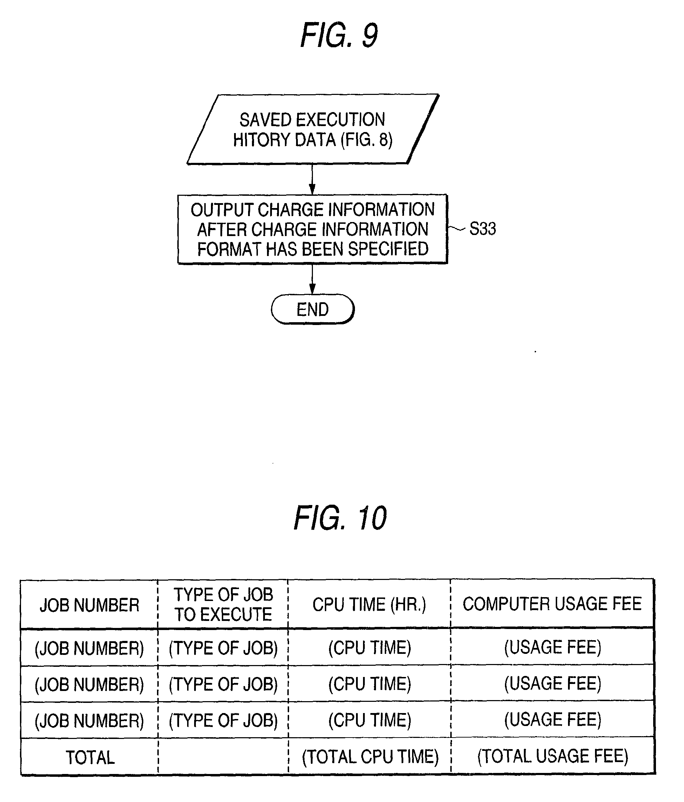

Next, the charge aggregation processing of the embodiment will now be described by reference to a flowchart shown in Fig. 9. The charge aggregation server 6 has the function of compiling charge aggregation information, which is based on a computer usage fee per unit time set at the time of changing of priority of a queued job, from the execution history data saved in step S32 and of outputting the thus-compiled information.

In step S33, a computer usage fee is computed on a per-user basis from the information which assumes the storage format of the execution history data 32 and is shown in Fig. 8. For instance, a computer usage fee is computed on a user-by-user basis in the output format shown in Fig. 10. Here, an individual computer usage fee is determined, by means of multiplying a computer usage fee per unit time by a time which elapses before completion of a job.

As mentioned above, in the present embodiment, there is embodied a function of billing a computer usage fee in accordance with the priority of a job when a user has lowered priorities of jobs for processing a specific job first or for curtailing a computer usage fee. In this way, when a user uses a distributed computer system, jobs can be executed in accordance with the circumstances of the user. Simultaneously, a charge can be billed in accordance with the rate of utilization of the distributed computer system. Hence, all users can be satisfied in an equitable manner.

As has been described, according to the invention, when a user of a distributed computer system has lowered the priority of his/her requested job, the rate of a decrease in priority can be adjusted in accordance with the time factor or time limit of the job. Hence, when the user loads a job, the user can lower priorities of respective jobs in accordance with their circumstances. Further, the priorities of other jobs can be increased, by means of lowering the priority of a specific job. Thus, there is yielded a superior advantage of the ability to enable the user to select a job execution method in accordance with the circumstances of respective jobs.

According to the invention, when a user of the distributed computer system has lowered the priority of a job, a reward is afforded to that user. Specifically, there is yielded a superior advantage of the ability to realize equitable billing of a computer usage fee by mean of billing a charge in accordance with the result of adjustment of priorities of jobs. A user who desires to curtail a computer usage fee can select a way to use a distributed computer system with a lower job priority.

As mentioned above, in relation to all the jobs which are to be processed by a distributed computer system, priorities of the jobs are controlled in accordance with time factors or limits of the jobs. Hence, there is also yielded an advantage of the ability to render a determination that new capital investment on a distributed computer system is required if processing of higher priority is not executed within a certain period of time.

**Claims**

1. A distributed computer system including a plurality of computers linked together by way of a network, the system comprising:

   an execution history saving unit for saving execution history data pertaining to a job processed by the system in a referable manner;
   a queued job completion time computation unit for predicting a completion time of a loaded job, from processing capacity and operating condition of the system and the execution history data; and
   a job execution priority management unit for adjusting a rate of decrease in priority of the loaded job in accordance with the completion time of the job predicted for a case where the priority of the loaded job is lowered.

2. The distributed processing system as claimed in claim 1, wherein, when the priority of a loaded job is lowered, the queued job completion time computation unit predicts a completion time of jobs under execution and jobs in queue having priorities higher than that of the loaded job.

3. The distributed processing system as claimed in claim 1, further comprising:

   an analogous job selecting unit for selecting a job analogous to the job loaded by a user of the system from the execution history data,

   wherein the queued job completion time computation unit predicts a completion time of the job for a case where the priority of the loaded job is lowered, by reference to execution history data pertaining to the selected analogous job.

4. The distributed processing system as claimed in claim 1, further comprising:

   an analogous job specifying unit for specifying a job number of the job analogous to the job loaded by a user of the system from among jobs executed in the past,

   wherein the queued job completion time computation unit predicts a completion time of the job for a case where the priority of the loaded job is lowered, by reference to execution history data pertaining to the job assigned the specified job number.

5. The distributed processing system as claimed in claim 1, further comprising:

a predicted execution time input unit for inputting a predicted execution time of a job loaded by a user of the system;

wherein, when a job analogous to the loaded job is not found in the jobs executed in the past, the queued job completion time computation unit predicts a completion time of the job for a case where the priority of the loaded job is lowered, by reference to the entered, predicted execution time.

6. The distributed processing system as claimed in claim 1, further comprising:

a first charging unit for increasing or decreasing a computer usage fee per unit time for a loaded job in accordance with a change in the priority of the job when the priority of the job has been changed by the job execution priority management unit.

7. The distributed processing system as claimed in claim 1, further comprising:

a second charging unit for increasing a computer usage fee per unit time for the loaded job when priorities of other jobs are lowered as a result of adjustment having been performed so as to increase the priority of the loaded job with use of the means for adjusting a rate of decrease in the priority of the loaded job and simultaneously lowering computer usage fees for the other jobs whose priorities have been lowered by an amount corresponding to the increase in the computer usage fee.

8. A distributed job processing method which uses a distributed computer system including a plurality of computers linked together by way of a network, the method comprising:

saving execution history data pertaining to a job processed by the system in a referable manner;
predicting a completion time of a loaded job, from processing capacity and operating condition of the system and the execution history data; and
adjusting a rate of decrease in priority of the loaded job in accordance with the completion time of the job predicted for a case where the priority of the loaded job is lowered.

9. The distributed processing method as claimed in claim 8, wherein, when the priority of a loaded job is lowered, a completion time of jobs under execution and jobs in queue having priorities higher than that of the loaded job is predicted in the step of predicting a completion time of a loaded job.

10. The distributed processing method as claimed in claim 8, further comprising:

selecting from the execution history data a job analogous to the job loaded by a user of the system; and
predicting a completion time of a loaded job for a case where the priority of the loaded job is lowered, by reference to execution history data pertaining to the selected analogous job.

11. The distributed processing method as claimed in claim 8, further comprising:

specifying a job number of the job from among jobs executed in the past that is analogous to the job loaded by a user of the system; and
predicting a completion time of a loaded job for a case where the priority of the loaded job is lowered, by reference to execution history data pertaining to the job assigned the specified job number.

12. The distributed processing method as claimed in claim 8, further comprising:

inputting a predicted execution time of a job loaded by a user of the system; and
predicting, with reference to the inputted predicted execution time, a completion time of a loaded job for a case where the priority of the loaded job is lowered, when a job analogous to the loaded job is not found among the jobs executed in the past.

13. The distributed processing method as claimed in claim 8, further comprising:

performing a charging operation by means of increasing or decreasing a computer usage fee per unit time for a loaded job in accordance with a change in the priority of the job when the priority of the job has been changed by the means for adjusting a rate of decrease in the priority of the loaded job.

14. The distributed processing method as claimed in claim 8, further comprising:

performing a charging operation by increasing a computer usage fee per unit time for the loaded job when priorities of other jobs are lowered as a result of adjustment having been performed so as to increase the priority of the loaded job by use of the means for adjusting a rate of decrease in the priority of the loaded job and simultaneously lowering computer usage fees for the other jobs whose priorities have been lowered by an amount corresponding to the increase in the computer usage fee.

15. A program having the distributed job processing method as claimed in claim 8 described therein.

16. A recording medium having recorded thereon the program having the distributed job processing method as claimed in claim 8 described therein.

## FIG. 1

# FIG. 2

EXECUTION HISTORY DATA — 32

31

102 — JOB HISTORY SAVING FUNCTION

101 — JOB HISTORY REFERENCE FUNCTION

(REQUQEST FOR REFERRING TO JOB HISTORY)

104 — JOB DISTRIBUTION FUNCTION

103 — JOB EXECUTION PRIORITY MANAGEMENT FUNCTION

(JOB EXECUTION REQUEST)

105 — FUNCTION OF COMPUTING COMPLETION TIME OF QUEUED JOB

106 — SERVER AVAILABILITY COMPUTATION FUNCTION

108 — SERVER OPERATION SCHEDULE MANAGEMENT FUNCTION

107 — SERVER PERFORMANCE MANAGEMENT FUNCTION

(SERVER EXECUTES JOB)

*FIG. 3*

START

REQUEST EXECUTION OF JOB — S20

S21 — ENTER NUMERAL IN JOB EXECUTION PRIORITY FIELD?

NO PRIORITY: NUMERAL 0

PRIORITY: NUMERAL 1

S22 — SPECIFY JOB HISTORY NUMBER OF ANALOGOUS JOB EXECUTED IN THE PAST?

NONE: NUMERAL 0

UNKNOWN: NUMERAL 1*

RETRIEVE, FROM JOB EXECUTION HISTORY DATA, JOB NUMBER OF ANALOGOUS JOB — S23

FOUND: DESIGNATE NUMBER

S24 — RETRIEVE, FROM JOB NUMBER OF ANALOGOUS JOB, TIME REQUIRED BEFORE COMPLETION OF JOB OF INTEREST

S25 — COMPUTE AVAILABILITY OF SERVER THAT IS EXECUTING JOB

NUMBER OF JOBS WHOSE PRIORITIES HAVE BEEN LOWERED (N)

S26 — COMPUTE COMPLETION TIMES OF QUEUED JOBS

S27 — COMPUTE REQUISITES FOR TERMINATING JOB OF INTEREST BY DESIRED TIME LIMIT

FAIL TO COMPLETE JOB (N = 1)

S28 — TERMINATE JOB OF INTEREST BY DESIRED TIME LIMIT?

FAIL TO COMPLETE JOB (N = N - 1)

PROVIDE SHORTEST COMPLETION DATE OF JOB — S31

COMPLETE JOB

PROVIDE COMPUTER USAGE FEE REQUIRED FOR EXECUTING JOB — S29

S30 — EXECUTE JOB?

NO

YES

SAVE EXECUTION HISTORY OF JOB AFTER EXECUTION OF JOB — S32

END

## FIG. 4

(TYPE OF JOB TO BE EXECUTED)   (PRIORITY OF JOB)   (EXECUTION NUMBER OF ANALOGOUS JOB)   (NAME OF TASK UNIT GROUP)   (COMMENT)

## FIG. 5

(EXECUTION NUMBER OF JOB)   (DATE ON WHICH JOB IS REQUESTED)   (COMMENT)

## FIG. 6

(SERVER NAME)   (COMPUTER CAPABILITY)   (TIME REQUIRED BEFORE COMPLETION OF JOB)   (TIME THAT HAS ELAPSED BEFORE EXECUTION OF JOB)

## FIG. 7

(JOB NUMBER)   (TYPE OF JOB TO BE EXECUTED)   (PRIORITY OF JOB)   (JOB CONSUMPTION CAPABILITY)   (NAME OF TASK UNIT GROUP)   (COMMENT)   (COMPUTER USAGE FEE PER UNIT TIME)

## FIG. 8

(JOB NUMBER)   (TYPE OF JOB TO BE EXECUTED)   (NAME OF TASK UNIT GROUP)   (COMMENT)   (JOB CONSUMPTION CAPABILITY)   (JOB EXECUTION TIME)   (COMPUTER USAGE FEE PER UNIT TIME)

EP 1 293 901 A2

## FIG. 9

SAVED EXECUTION
HITORY DATA (FIG. 8)

OUTPUT CHARGE INFORMATION
AFTER CHARGE INFORMATION — S33
FORMAT HAS BEEN SPECIFIED

END

## FIG. 10

| JOB NUMBER | TYPE OF JOB TO EXECUTE | CPU TIME (HR.) | COMPUTER USAGE FEE |
|---|---|---|---|
| (JOB NUMBER) | (TYPE OF JOB) | (CPU TIME) | (USAGE FEE) |
| (JOB NUMBER) | (TYPE OF JOB) | (CPU TIME) | (USAGE FEE) |
| (JOB NUMBER) | (TYPE OF JOB) | (CPU TIME) | (USAGE FEE) |
| TOTAL | | (TOTAL CPU TIME) | (TOTAL USAGE FEE) |